# EUROPEAN PATENT APPLICATION

(11) **EP 4 579 423 A1**
(43) Date of publication of application: **02.07.2025**
(21) Application number: 23856524.6
(22) Date of filing: 16.08.2023
(51) Int. Cl.: G06F 3/06, G06F 16/16, G06F 12/02

(54) **STORAGE SYSTEM AND DATA PROCESSING METHOD**

(30) Priority: 24.08.2022 CN 202211019838
(71) Applicant: Cloud Intelligence Assets Holding (Singapore) Private Limited, Singapore 189554 (SG)
(72) Inventor: DONG, Yuanyuan, Hangzhou, Zhejiang 310030 (CN); ZHUANG, Canwei, Hangzhou, Zhejiang 310030 (CN); KONG, Weikang, Hangzhou, Zhejiang 310030 (CN)
(74) Representative: Barker Brettell LLP
(86) International application number: PCT/CN2023/113375
(87) International publication number: WO 2024/041434

(57) **Abstract**

A storage system and a data processing method are provided, where the system includes a client and a data node; the client is configured to receive a tagging operation instruction for a data file, parse the tagging operation instruction to obtain tagging operation information, generate a data operation request corresponding to a target data node according to the tagging operation information, and send the data operation request to the target data node; the target data node is configured to receive the data operation request, and perform a tagging processing on data interval to be operated associated with the data file in a local storage space according to the data operation request. By tagging the unnecessary data stored in the data node, invalid data does not need to be processed in the subsequent garbage collection, which effectively reduces the write amplification generated by garbage collection and reduces the garbage data, and also enables data to be directly written into the data interval to be operated when it is subsequently written into the data node, thus improving the writing efficiency and reducing the storage cost.

## Description

The present application claims priority to Chinese patent application No. 202211019838.6, entitled "STORAGE SYSTEM AND DATA PROCESSING METHOD" and filed with the China National Intellectual Property Administration on August 24, 2022, the content of which is incorporated into this application by reference in its entirety.

### TECHNICAL FIELD

Embodiments of the specification relate to the technical field of information storage and, in particular, to a storage system and a data processing method. One or more embodiments of this specification relate to a data processing apparatus, a computing device, and a computer-readable storage medium.

### BACKGROUND

With the continuous development of Internet technology, in order to realize reliable mass data storage, distributed storage systems are widely used at present. Three-copy mechanism is widely used in a distributed storage system, such as key-value (key-value) distributed storage system, so that data can be stored in different locations to improve the reliability of data storage. At present, the distributed storage system includes three layers: a distributed file system at a bottom layer, a KV storage engine at a middle layer, and a computing engine at a top layer. Under this structure of the distributed storage system, in order to ensure the reliability of data, data are deleted and modified in an Append-Only (Append-Only) manner, therefore, in the distributed storage system with multi-layer architecture, an intermediate KV class storage engine layer and a bottom standalone storage engine layer both process data in the above manner. In a subsequent memory release processing, each layer needs to perform garbage collection separately, which leads to greater write amplification and increased garbage data, thus affecting the performance of the whole system.

Therefore, how to reduce write amplification in the process of garbage collection in distributed storage systems, reduce garbage data, reduce storage cost and improve system performance is an urgent problem to be solved at present.

### SUMMARY

In view of this, embodiments of this specification provide a storage system, which provides Trim capability, can reduce the write amplification caused by garbage collection, improve the performance of the whole system, reduce garbage data and reduce storage cost. One or more embodiments of this specification simultaneously relate to a data processing method, a data processing apparatus, a computing device, a computer-readable storage medium and a computer program, in order to solve the technical defects existing in the prior art.

According to a first aspect of an embodiment of this specification, a storage system is provided, the system includes a client and a data node, the client is configured to receive a tagging operation instruction for a data file, parse the tagging operation instruction to obtain tagging operation information, generate a data operation request corresponding to a target data node according to the tagging operation information, and send the data operation request to the target data node; and the target data node is configured to receive the data operation request, and perform a tagging processing on data interval to be operated associated with the data file in a local storage space according to the data operation request.

According to a second aspect of an embodiment of this specification, a data processing method applied to a client in a storage system is provided, including:
receiving a tagging operation instruction for a data file;
parsing the tagging operation instruction to obtain tagging operation information; and
generating a data operation request corresponding to a target data node according to the tagging operation information, and sending the data operation request to the target data node.

According to a third aspect of an embodiment of this specification, a data processing method applied to a target data node in a storage system is provided, including:
receiving a data operation request for a data file; and
performing a tagging processing on a data interval to be operated associated with the data file in a local storage space according to the data operation request.

According to a fourth aspect of an embodiment of this specification, a data processing apparatus applied to a client in a storage system is provided, including:
a receiving module, configured to receive a tagging operation instruction for a data file;
a parsing module, configured to parse the tagging operation instruction to obtain tagging operation information;
a sending module, configured to generate a data operation request corresponding to a target data node according to the tagging operation information, and send the data operation request to the target data node.

According to a fifth aspect of an embodiment of this specification, a data processing apparatus applied to a target data node in a storage system is provided, including:
a receiving module, configure to receive a data operation request for a data file;
a tagging module, configured to perform tagging processing on the data interval to be operated associated with the data file in a local storage space according to the data operation request.

According to a sixth aspect of an embodiment of this specification, a computing device is provided, including a memory, a processor, and computer instructions stored in the memory and executable on the processor, where when the processor executes the computer instructions, the steps of the data processing method are implemented.

According to a seventh aspect of an embodiment of this specification, a computer-readable storage medium is provided, which stores computer instructions, and when the computer instructions are executed by a processor, the steps of the data processing method are implemented.

According to an eighth aspect of an embodiment of this specification, a computer program is provided, when the computer program is executed in a computer, the computer is caused to implement the steps of the above data processing method.

This specification provides a storage system, where the system includes a client and a data node; the client is configured to receive a tagging operation instruction for a data file, parse the tagging operation instruction to obtain tagging operation information, generate a data operation request corresponding to a target data node according to the tagging operation information, and send the data operation request to the target data node; the target data node is configured to receive the data operation request, and perform a tagging processing on data interval to be operated associated with the data file in a local storage space according to the data operation request.

Embodiments of this specification realize that the tagging operation instruction for the data file is converted into the data operation request for the data interval of the data node through the client, and unnecessary data stored in the data node is tagged, so that invalid data does not need to be processed again in the subsequent garbage collection, which effectively reduces the write amplification generated by garbage collection and reduces the garbage data, and also enables new data to be directly written into the data interval to be operated when the new data is subsequently written into the data node, thereby improving the writing efficiency, optimizing the storage of the data node and reducing the storage cost.

### BRIEF DESCRIPTION OF DRAWINGS

FIG. 1 is a schematic diagram of a scenario in which a storage system performs a tagging operation provided by an embodiment of this specification.
FIG. 2a is a schematic diagram of the architecture of a storage system provided by an embodiment of this specification.
FIG. 2b is a schematic structural diagram of a storage system provided by an embodiment of this specification.
FIG. 3 is a flowchart of a data processing method applied to a client in a storage system provided by an embodiment of this specification.
FIG. 4 is a flowchart of a data processing method applied to a target data node in a storage system provided by an embodiment of this specification.
FIG. 5 is a schematic diagram of interaction between a client and a target data node in a storage system provided by an embodiment of this specification.
FIG. 6 is a schematic structural diagram of a data processing apparatus applied to a client in a storage system provided by an embodiment of this specification.
FIG. 7 is a schematic structural diagram of a data processing apparatus applied to a target data node in a storage system provided by an embodiment of this specification.
FIG. 8 is a structural block diagram of a computing device provided by an embodiment of this specification.

### DESCRIPTION OF EMBODIMENTS

In the following description, numerous specific details are set forth to facilitate a thorough understanding of this specification. However, this specification can be implemented in many other ways different from those described here, and those skilled in the art can make similar promotion without violating the connotation of this specification, therefore, this specification is not limited by the specific implementation disclosed below.

Terminology used in one or more embodiments of this specification is for the purpose of describing specific embodiments only and is not intended to limit one or more embodiments of this specification. The singular forms of "a", "the" and "said" used in one or more embodiments of this specification and the appended claims are also intended to include the plural forms, unless the context clearly indicates other meaning. It should also be understood that the term "and/or" used in one or more embodiments of this specification refers to any or all possible combinations containing one or more associated listed items.

It should be understood that although that term first, second, and so on, may be used to describe various information in one or more embodiment of this specification, such information should not be limited to these terms. These terms are only used to distinguish the same type of information from each other. For example, without departing from the scope of one or more embodiments of this specification, the first can also be referred to as the second, and similarly, the second can also be referred to as the first. Depending on the context, the word "if" as used herein can be interpreted as "when" or "while" or "in response to a determination".

First, the terminology involved in one or more embodiments of this specification is explained.

Append-only: a writing mode at which only append writing is supported, while random modification is not supported.

File: a piece of continuously stored data uniquely identified by a file name or a file Id. Each file consists of one or more Chunk.

Chunk: Chunk is data of a continuous interval in a storage file, and each Chunk can be a multi-copy chunk or an erasure codes chunk.

Replica: Replica is a block of continuous data that Chunk is stored in a standalone storage engine. For the multi-copy Chunk, each replica is the same; and for the erasure codes chunk, each Replica stores data slices that meet the erasure codes slicing and arrangement rules, and the data of each slice is different.

KV storage engine: refers to an engine built on the storage system to store data in Key-Value mode and provide access to data in Key mode.

ZNS-SSD: (Zoned Namespace, Zoned Namespace) - (Solid State Disk, Solid State Disk) is developed on the basis of SSD, which realizes the migration of FTL (Flash Translation Layer, Flash Translation Layer) from the inside of SSD to an upper Host end, and opens the inside of SSD to the Host end, so that users can have their own specific FTL flexibly according to their own needs.

At present, a three-layer architecture is widely used in various distributed storage systems such as an object storage, a file storage, a table storage and a block storage, as well as in database systems such as a distributed analytical database, a distributed transactional database and an analytical-transactional hybrid database. The bottom layer uses Append-Only distributed file system for a persistent storage with high reliability and high availability, the intermediate layer uses various types of KV storage as row storage engines, or column storage engines, or row-column mixed engines, and the upper layer is front-end access layer or computing engine layer. In this kind of architecture, the deletion, modification and update of data are all realized by writing Log in an Append-Only manner, so as to make full use of the access characteristics of storage media and improve writing throughput, and then release the physical space of the overwritten or deleted data in the background GC (Garbage Collection, Garbage Collection) process. Therefore, in this kind of architecture, the GC optimization of KV layer is the key technology of this technical architecture, and it is also the direction of continuous optimization and breakthrough for relevant technicians.

With the bottom distributed file system supporting more and more storage media such as ZNS SSD/SMR HDD that only support Append-only, the standalone storage layer of distributed file system also adopts a storage structure similar to KV, and the deletion, modification and update of data are realized by writing log in the manner of Append-Only, and the physical space of the overwritten or deleted data is truly released by relying on the background GC. Therefore, the intermedia KV storage engine layer and the bottom distributed file system layer perform GC independently, which is lack of coordination and will bring greater write amplification and increase garbage data, thus affecting the overall system performance and cost and reducing the competitiveness of the system.

Based on this, in this specification, a storage system is provided, which provides Trim capability, and could reduce the write amplification caused by garbage collection, improve the performance of the whole system, reduce garbage data and reduce storage cost. Two data processing methods are provided. This specification relates to two data processing apparatuses, a computing device, a computer-readable storage medium and a computer program, which are described in detail in the following examples.

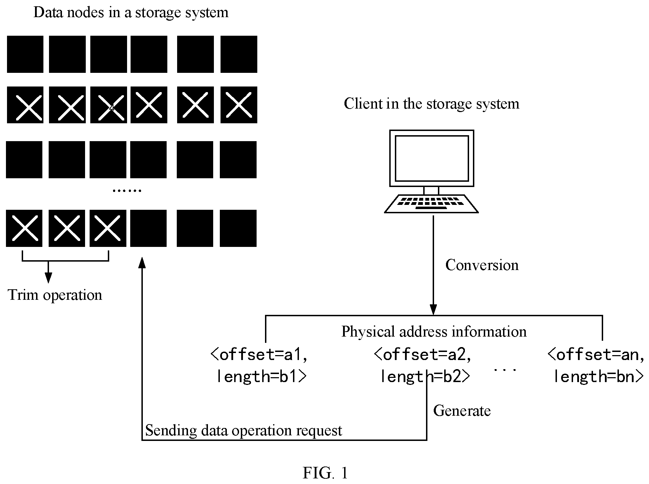

FIG. 1 illustrates schematic diagram of a scenario in which a storage system performs a tagging operation provided by an embodiment of this specification. The client in the storage system will convert tagging operation information carried in a tagging operation instruction into logical address information after receiving the tagging operation instruction for the data file, where the logical address information is the specific location information of the data file on the data block in the storage node, and subsequently, data nodes can further map the physical address information corresponding to the data file, that is, the specific location of the data on the disk, according to the logical address information.

Referring to FIG. 1, after a client receives a tagging operation instruction for a data file, that is, an instruction to trim the data file, the tagging operation instruction carries tagging operation information, which includes key information such as the unique file ID (fileId), offset within the file (Offset), length of Trim (Length), etc. The client will convert the tagging operation instruction into a data operation request at the block level in the target data node, and send the data operation request to a target data node. The target data node will perform actual Trim operation according to operation description information carried in the data operation request, thus completing the tagging processing on the data file. In the subsequent garbage collection processing, the data node can directly clean the tagged data, reducing the write amplification caused by garbage collection and improving the processing efficiency.

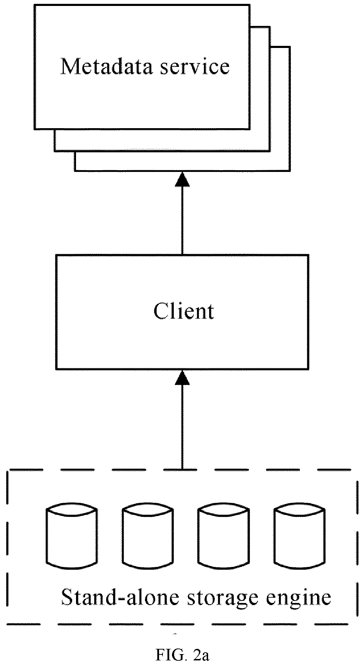

FIG. 2a shows an architecture diagram of a storage system provided according to an embodiment of this specification. The architecture diagram of the storage system includes a metadata service, a client and a standalone storage engine, where metadata is system data used to describe the file system and file characteristics, such as file type, file size, access rights and data index information, etc. Before accessing file data, the user needs to access the metadata of the file to obtain basic attribute information of the file and index information of the data. The client is responsible for sending read-write requests to the standalone storage engine. If there are three copies of data files to be written, the read-write requests are sent to the client first, and then forwarded to the standalone storage engine by the client. Standalone storage engine, also called data node or data server, is used to store file data and ensure the availability and integrity of data. In the storage system, data is distributed to be stored in multiple standalone storage engines, so that the performance and capacity can be expanded at the same time, and the system scale is very scalable.

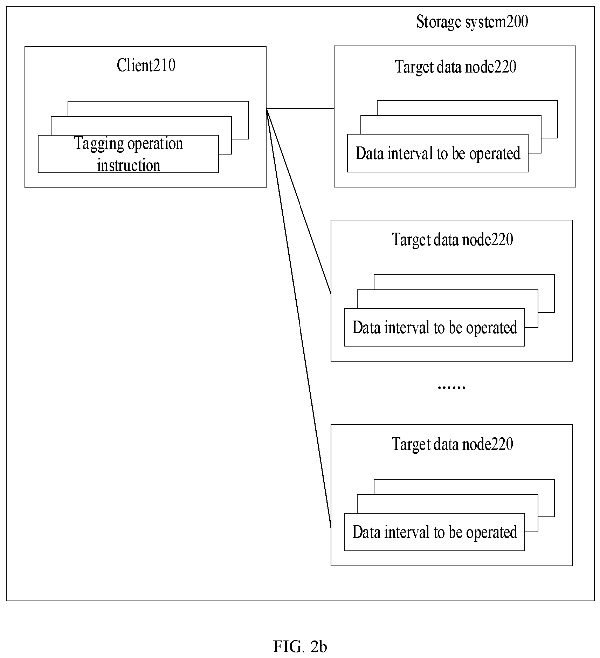

FIG. 2b shows a schematic structural diagram of a storage system provided according to an embodiment of this specification. The storage system 200 includes a client 210 and a data node 220, and the following is a further explanation of the tagging operation of trim performed by the storage system.

The client 210 is configured to receive a tagging operation instruction for a data file, parse the tagging operation instruction, obtain tagging operation information, generate a data operation request corresponding to a target data node according to the tagging operation information, and send the data operation request to the target data node.

The target data node 220 is configured to receive the data operation request, and perform tagging processing on a data interval to be operated associated with the data file in the local storage space according to the data operation request.

Among them, the data file can be understood as the data file that is no longer needed by the project. When the intermediate KV class storage engine layer needs to delete the invalid data in the project, it can call the trim interface provided in the storage system to tag the invalid data stored in the data node in the storage system. In the subsequent garbage collection, it can directly overwrite the invalid data according to the tagging information, or delete the tagged invalid data, which is convenient for writing new data and improving the writing efficiency. The tagging operation instruction can be understood as an instruction to call the trim interface of the storage system and perform the trim operation. Specifically, the client 210 includes a tagging operation interface, and the client 210 is configured to call the tagging operation interface to parse the tagging operation instruction and obtain the tagging operation information, where the tagging operation information includes file identification information, file offset information and file tag length information.

In a practical application, the storage system can be a distributed file storage system. After the client in the distributed file storage system receives the tagging operation instruction, the client calls the tagging operation interface to parse the tagging operation instruction. The tagging operation interface is an interface that provides trim capability, and the subsequent trim operation is performed based on the trim interface. The trim interface is called to parse the tagging operation information carried in the tagging operation instruction, where the tagging operation information includes key information such as file identification information, i.e. file unique identification fileId, file Offset information, i.e. Intra-file offset (Offset), file tagging length information, i.e. trim length (Length), etc. The tagging operation information can be understood as logical address information of data files. In order for the data node to obtain the specific location of the data file in this storage space, the tagging operation information needs to be converted into a data operation request that can be processed by the target data node, and the target data node can map out the physical address information of the disk where the data file is located according to the logical address information carried in the data operation request. When the data associated with the data file is in the data node, this data node is the target data node to be operated in this trim. Each target data node corresponds to its own data operation request, and the data operation request corresponding to each target data node contains the Offset (Offset) of data of the data file in the target data node and data length (Length). According to the data operation request, the data interval to be operated that requires trim operation can be determined. The data interval to be operated can be understood as the data interval to be deleted that needs data deletion operation, and the tagged data in this data interval can be deleted.

Among all data nodes, the target data node 220 needs to be trimmed this time, and the target data node will receive the corresponding data operation request, where the data node is the standalone storage engine in the storage system, and the data operation request includes ChunkId, ChunkOffset, Length managed by the standalone storage engine at the level of Chunk. The target data node further maps out the physical address information on the physical hard disk where the data file is located according to the data operation request, and implements the actual trim operation, that is, performing tagging operation on the data interval to be operated which manages the data file in the local storage space.

In a practical application, the intermediate KV class engine layer and the distributed file system at the bottom layer perform garbage collection independently, which lacks of collaborative processing and will bring greater write amplification and increase garbage data. In the embodiment of this specification, when the intermediate KV class engine layer performs trim operation on invalid data, it will call the distributed file system at the bottom layer to perform the trim operation in parallel, so that the data nodes in the distributed file system can perform the trim operation, and then the data that has been trimmed can be directly overwritten during garbage collection, thus improving the data release efficiency.

In an embodiment of this specification, the storage system includes a client and 10 data nodes. The client receives a tagging operation instruction for data files, where the data files are user data files of an inactive user A, and the tagging operation instruction is an instruction for performing the tagging operation on the user data files of the inactive user, that is, a trim instruction. The client parses the tagging operation instruction to obtain tagging operation information, which is file identification information "A" of the user data files, intra-file offset (Offset), and length of the trim (Length). According to the tagging operation information, the client determines that the user data files of user A are stored in data node 1 and data node 2 respectively, and then generates data operation request 1 for target data node 1 and data operation request 2 for target data node 2. The data operation request 1 includes the specific location of partial data files in the data block of target data node 1, and the data operation request 2 includes the specific location of partial data files in the data block of target data node 2. The data operation requests corresponding to respective target data nodes are sent to the corresponding target data nodes respectively, that is, the data operation request 1 is sent to target data node 1, and the data operation request 2 is sent to target data node 2.

Through the client, the file-level tagging operation information of the data file is converted into the Chunk-level data operation request of the data node, so that the subsequent target data node can determine the data interval to be operated corresponding to the data file according to the data operation request, so as to perform tagging processing.

In an embodiment of this specification, following the above example, the target data node 1 receives the data operation request 1, where the data operation request contains logical address information, and determines that the physical address information is the offset Offset=1MB+1KB and Length=1MB+1KB according to the logical address information, then the data interval to be operated is determined to be <1MB, 1MB+1KB> in the target data node 1, and the target data node 1 performs the tagging processing on the data interval to be operated. The target data node 2 receives the data operation request 2, which contains logical address information. According to the logical address information, it is determined that the physical address information is the offset Offset=2MB+1KB and Length=2MB+1KB, then the data interval to be operated is determined as <2MB, 2MB+1KB> in the target data node 2, and the target data node 2 performs tagging processing on the data interval to be operated.

According to the storage system providing trim capability provided by the embodiment of this specification, the intermediate KV storage engine can use the Trim capability of the storage system to eliminate GC traffic in the form of file rewriting, which greatly reduces the write amplification generated by GC, improves the performance of the whole system, reduces garbage data, and reduces data storage cost, thus enhancing the competitiveness of the system.

Specifically, the client generates a data operation request corresponding to the target data node according to the tagging operation information, and can first determine the logical address information according to the tagging operation instruction, and then generate the data operation request corresponding to the target data node. The client is configured to determine the logical address information corresponding to the data file according to the tagging operation information, and generate a data operation request corresponding to the target data node based on the logical address information.

In a practical application, as the tagging operation information is for the data files, and the data files are stored in different data blocks in different data nodes respectively, when trim operation is needed for the data files, it is necessary to first determine the logical addresses of the data files in the data blocks, and then find the data nodes of the data blocks corresponding to multiple Replica based on the logical addresses. For example, the tagging operation instruction includes the tagging operation information. The client determines that the corresponding logical address information is ChunkId, ChunkOffset = 1MB and Length=1MB in the target data node 1 according to the tagging operation information input by the user, i.e. file Id, file Offset and length, where the target data node 1 includes a plurality of data blocks, that is, the data nodes where the multiple data blocks are located are determined as the target data nodes. The data interval of each data block is different, which is <0, 0>, <1MB, 1MB+1KB>, <2MB, 2MB+1KB>, so that the client can generate a data operation request corresponding to the target data node 1, and subsequently, the data node 1 can further determine the physical address information of the data file in the hard disk according to the logical address information carried in the data operation request, and perform the actual trim operation.

In practice, after receiving the data operation request, the target data node 1 can determine the operation description information, that is, the physical address information, according to the logical address information carried in the data operation request, and determine the data interval to be operated, so as to perform the subsequent trim operation. Specifically, the target data node is configured to determine the operation description information according to the logical address information carried in the data operation request, determine the data interval to be operated associated with the data file in a local storage space according to the operation description information, and modify and save the attribute information of the data interval to be operated as a tagging processing for the data interval to be operated.

Among them, the operation description information can be understood as the corresponding physical address information of the data file in the target data node. Referring to the above example, the logical address information is ChunkId, ChunkOffset=1MB, and Length=1MB, and the physical address information is further mapped, with Offset=1MB+1KB and Length=1MB+1KB, so that the interval corresponding to the data blocks <1MB, 1MB+1KB> can be determined as the data interval to be operated among the multiple data blocks of the target data node 1, and tagging processing can be performed on the data interval. It is convenient for data nodes to directly release the storage space of the tagged data interval subsequently when performing GC process.

In a practical application, each data interval includes corresponding interval header data, where the interval header data includes the attribute information of the corresponding data interval, including corresponding tag information. Tagging the data interval can be understood as modifying the attribute information of the data interval, and modifying the tag information in the attribute information to be tagged and saving it, so that the data interval can be determined as data interval that has been trimmed after identifying the tag information in the attribute information as being tagged, so that data written in the data interval can be overwritten.

When a data node performs a trim operation, there are also cases where the operation fails. In this case, the client can continue to perform a corresponding operation processing according to storage state information. Specifically, the client is configured to query the storage state information of the tagging operation instruction and execute the operation processing corresponding to the storage state information when it is determined that operation feedback information corresponding to the data operation request is an operation failure.

Among them, the operation feedback information can be understood as feedback information received by the client for the trim operation after the trim operation is executed. According to the operation feedback information, it can be known whether the tagging operation was executed successfully or not. When the operation feedback information fails, the client executes an operation processing corresponding to the storage state information according to the storage state information. In a practical application, the trim operation is successful only after the tagging processing operation is successfully performed on all the data blocks of the associated data file.

In concrete implementation, the storage state information is divided into two types, namely, persistent storage state and non-persistent storage state. In the persistent storage state, the client can persist the trim operation, that is, cache the data operation request corresponding to this trim operation, and repeatedly execute the step of sending the data operation request to the target data node until this trim operation is successfully executed. When the storage state information is in the non-persistent storage state, in a case that the trim operation fails, the client will feed back the failure information to the intermediate KV class storage engine layer, and the intermediate KV class storage engine layer will record the failure of this trim operation, so that the intermediate KV class storage engine layer can re-send the tag processing instruction to the client for this trim operation until the trim operation is successfully executed. Specifically, the client is configured to execute the step of sending the data operation request to the target data node based on a persistent data operation request when the storage state information is in the persistent storage state.

In a case that the storage state information is in the non-persistent storage state, processing result information corresponding to the tagging operation instruction is generated and sent to an index system corresponding to the storage system, where the index system is used for resending the tagging operation instruction to the storage system.

In a practical application, when the storage state is the persistent storage state, the client of the storage system can persist the data operation request, that is, save the data operation request locally to facilitate failover processing. For example, in the case of three copies, partial data nodes successfully perform trim operation, but the client is shut down; or partial data nodes are shut down, which makes it impossible to perform trim operation immediately. The data operation request is persisted, so that when the client restarts, it can resend the data operation request to the target data node, and the target data node will perform the corresponding trim operation. Or, when the data node that is shut down this time is restarted, the client sends the corresponding data operation request to the data node, so that the data node performs the corresponding trim operation, thereby realizing the normal execution of the trim operation.

In an embodiment of this specification, after receiving the tagging operation instruction, the client generates a data operation request corresponding to the target data node according to the tagging operation instruction, and caches the data operation request. After the client is shut down and restarted, the client reads the unexecuted data operation request from the cached data and sends the data operation request to the corresponding target data node, so that the data node can normally execute the corresponding data operation.

In another embodiment of this specification, when the client sends a data operation request to the target data node, as the target data node is shut down, it cannot receive the data operation request, and cannot perform the corresponding data tagging processing. When the target data node is restarted, the client will send the corresponding data operation request to the target data node again, so that the target data node can complete the data tagging processing corresponding to the data operation request.

In a practical application, in a case that the storage state is the non-persistent storage state, the client of the storage system may not persist the trim operation, that is, it does not save the data operation request locally. When there is a failover in the data node or the client, it returns the trim failure information to the index system, that is, the upper KV class engine layer, and the KV engine records the unsuccessful Trim operation, and then only retries the processing.

In an embodiment of this specification, when the client sends a data operation request to the target data node, as the target data node is shut down, it cannot receive the data operation request, and cannot perform the corresponding data tagging processing. The client will feed back the data operation request to the upper KV class engine layer, and the KV class engine layer will record the unsuccessful data operation request, and the KV class engine layer will resend the tagging processing instruction to the client at an appropriate timing.

Through the above two failover modes, when encountering the unsuccessful performed trim operation, the failed trim operation can be recorded, and the subsequent retry processing can be carried out until the trim operation is completed, which provides a reliable trim execution mode and improves the reliability of the system.

When a new data node needs to be written to the target data node after the target data node completes the trim operation on invalid data, the target data node can write new data in the data interval tagged with trim, thus realizing the rapid writing of data and improving the storage capacity. Specifically, the target data node is further configured to receive a data writing instruction for target data, determine a data interval to be used in a local storage space in response to the data writing instruction, delete data in the data interval to be used, and write the target data into the data interval to be used, where the data interval to be used belongs to the data interval to be operated.

Among them, the data writing instruction can be understood as an instruction to write the target data into the data block in the target data node, and the data interval to be used can be understood as a data control that has undergone trim operation, and the data in the data interval to be used is tagged as invalid data, so that the data node can directly identify the invalid data, overwrite the target data into the data interval, and complete the writing processing of the target data.

In a practical application, as the trim operation only performs the tagging processing on the data interval to be operated in the data node and does not delete the data in the data interval to be operated, when new data needs to be written, the data in the data interval to be operated can be deleted first, and then the target data can be written to the data interval to be operated.

In an embodiment of this specification, a target data node receives a data writing instruction for target data, determines a data interval to be used in a local storage space according to the data writing instruction, where the data in the data interval to be used is invalid data, deletes the invalid data in the data interval to be used, and writes the target data into the data interval to be used to complete the writing processing of the target data.

In practice, when the writing interval of the target data is larger than the data interval to be operated, it is necessary to ensure that the adjacent interval of the data interval to be operated is also the data interval to be operated or a data interval without data, so that the two data intervals form a continuous storage space for the target data to be written.

In order to ensure the correctness of the system operation, the project system applying the storage system needs to ensure that the data that has been subjected to trim operation will not be read. However, when the upper KV class storage engine layer reads the data that has been subjected to trim operation, the client will return undefined feedback results to the upper KV class storage engine layer. Specifically, the client is further configured to receive a data reading instruction for the data file and send a data reading request to the target data node according to the data reading instruction. The target data node is further configured to receive the data reading request, generate a feedback result according to the data reading request, and send the feedback result to the client.

The data reading instruction can be understood as an instruction to read the data stored in the data node. After receiving the data reading instruction for the data file, the client will send a data reading request to the target data node. Similarly to performing the tagging processing instruction for the data file, the client will also convert the file-level data reading instruction into a Chunk-level data reading request in the data node, so that the target data node can return the corresponding data reading result according to the data reading request.

In a practical application, as the data file has been trimmed, the feedback results returned by the target data node to the client are undefined, however, they are divided into three different situations and they are: trim operation has been successfully performed on all the data in the data file; trim operation was not successfully performed on all data in the data file; trim operation was successfully performed on partial data in the data file, and trim operation was not successfully performed on partial data in the data file.

In the case that trim operation has been successfully performed on all the data, the feedback result of the target data node is all 0 data. In a case that trim operation has not been successfully performed on all the data, the feedback result of the target data node is the original data before trim. In the case that trim operation was successfully performed on partial data, and trim operation was not successfully performed on partial data, the feedback result of the target data node is that partial data are 0 and partial are original data before trim. Specifically, the target data node is configured to generate a feedback result indicating that the data is unreadable when the data operation request is successfully executed. When the data operation request fails to be executed, the original data in the data interval to be operated is taken as a feedback result. When the data operation request partially fails to execute, the original data corresponding to the failed execution of the data operation request in the data interval to be operated is taken as a first feedback result, and a second feedback result is generated according to the data corresponding to the successful execution of the data operation request in the data interval to be operated, and a feedback result is generated based on the first feedback result and the second feedback result.

In practice, the feedback result of unreadable status can be understood as data with all zeros. After performing trim operation on the date, the data can no longer be read after the trim, so the target data node will feed back the result of unreadable status to the client. When trim fails, the target data node will feed back the original data of the data file to the client. When trim operation was successfully performed on partial data, and not successfully performed on partial data, the target data node will feed back partial unreadable data and original data to the client.

In another embodiment of this specification, the client is configured to receive a tagging operation instruction for a data file, store the tagging operation information associated with the tagging operation instruction in an operation log, and update the data operation table associated with the data file according to the tagging operation information recorded in the operation log when the operation log meets a log information processing condition; generate a data operation request corresponding to the target data node based on the updated data operation table, and send the data operation request to the target data node.

Specifically, a data file is a file type in a computer system, which can be used to store various types of data. In a storage system, a data file has a file identifier and consists of one or more data intervals, and each data interval includes a plurality of data blocks. Tagging operation instruction refers to a computer instruction for tagging data in a data file. Tagging operation instruction usually carries tagging operation information, where the tagging operation information includes data interval information that requires the tagging operation, and the serial number (i.e. ID) in the operation log used for tagging the tagging operation information stored in the operation log, where the operation log is used for recording the tagging operation information.

After the tagging operation information associated with the tagging operation instruction is stored in the operation log, the tagging operation information recorded in the operation log can be processed under the condition that the operation log meets the log information processing condition, where the log information processing condition refers to a preset processing condition for determining whether the tagging operation information stored in the operation log can be processed. In this embodiment, the log information processing condition includes determining that the operation log meets the log information processing condition when the number of tagging operation information stored in the operation log reaches a set quantity threshold; presetting a log processing cycle, and determining that the operation log meets the log information processing condition when the preset log processing cycle is reached. The data operation table is used to store relevant information of the data to be processed corresponding to the data file, including but not limited to data interval information, offset address information, length information, processing status information, etc.

Based on this, after updating the data operation table associated with the data file according to the tagging operation information recorded in the operation log, a data operation request corresponding to the target data node is generated based on the updated data operation table, and the data operation request is sent to the target data node, and after the target data node receives the data operation request, tagging operation is performed on the data stored in the data node.

The storage system provided by the specification comprises a client and a data node; where the client is configured to receive a tagging operation instruction for a data file, parse the tagging operation instruction to obtain tagging operation information, generate a data operation request corresponding to a target data node according to the tagging operation information, and send the data operation request to the target data node. The target data node is configured to receive the data operation request, and perform the tagging operation on the data interval to be operated associated with the data file in the local storage space according to the data operation request. The tagging operation instruction for data files is converted into a data operation request for data intervals of data nodes by the client, so that the unnecessary data of the project stored in the data nodes are tagged, so that invalid data does not need to be processed in the subsequent garbage collection, which effectively reduces the write amplification generated by garbage collection, reduces the garbage data, and also enables new data to be directly written into the data intervals to be operated when the new data is subsequently written into the data node, thereby improving the writing efficiency, optimizing the storage of data nodes and reducing the storage cost.

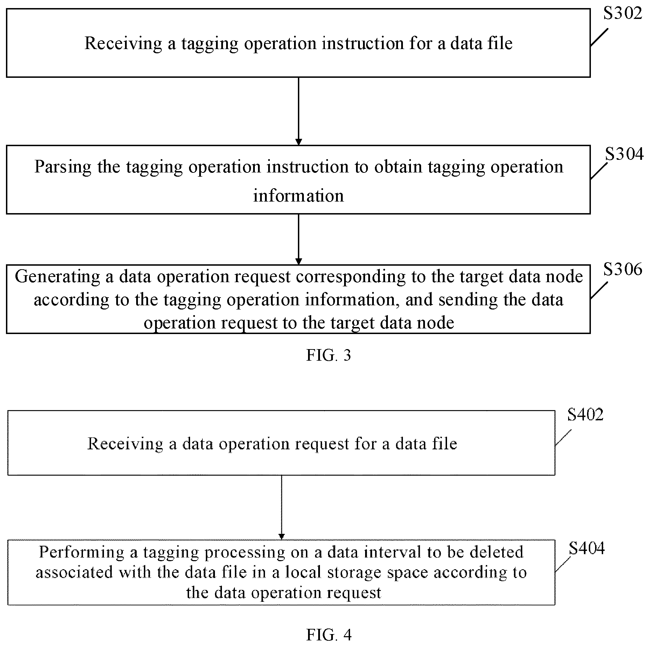

FIG. 3 shows a flowchart of a data processing method applied to a client in a storage system according to an embodiment of this specification, including steps S302 to 306.

Step S302: receiving a tagging operation instruction for a data file.

Step S304: parsing the tagging operation instruction to obtain tagging operation information.

Step S306: generating a data operation request corresponding to the target data node according to the tagging operation information, and sending the data operation request to the target data node.

Optionally, the method includes:
determining the logical address information corresponding to the data file according to the tagging operation information, and generating a data operation request corresponding to the target data node based on the logical address information.

Optionally, the method further includes:
querying the storage state information of the tagging operation instruction when it is determined that the operation feedback information corresponding to the data operation request is operation failure, and performing the operation processing corresponding to the storage state information.

Optionally, the method includes:
in a case that the storage state information is in a persistent storage state, performing the step of sending the data operation request to the target data node based on the persistent data operation request;
in a case that the storage state information is a non-persistent storage state, generating processing result information corresponding to the tagging operation instruction, and sending the processing result information to an index system corresponding to the storage system, where the index system is used for resending the tagging operation instruction to the storage system.

Optionally, the method further includes:
receiving a data reading instruction for the data file, and sending a data reading request to the target data node according to the data reading instruction.

Optionally, the method includes:
receiving a tagging operation instruction for a data file, storing the tagging operation information associated with the tagging operation instruction in an operation log, and updating a data operation table associated with the data file according to the tagging operation information recorded in the operation log under the condition that the operation log meets a log information processing condition;
generating a data operation request corresponding to the target data node based on the updated data operation table, and sending the data operation request to the target data node.

Optionally, the method includes:
the storage system is a distributed file system, and the client includes a tagging operation interface; and
the client is configured to call the tagging operation interface to parse the tagging operation instruction and obtain the tagging operation information, where the tagging operation information includes file identification information, file offset information and file tagging length information.

The data processing method provided in this embodiment is similar to the execution process of the target data node in the storage system provided in the above embodiment, and the same or corresponding descriptions can be referred to the above embodiment, which will not be repeated here.

The specification provides a data processing method applied to a client in a storage system, which comprises the following steps: receiving a tagging operation instruction for a data file; parsing the tagging operation instruction to obtain tagging operation information; generating a data operation request corresponding to the target data node according to the tagging operation information, and sending the data operation request to the target data node. The tagging operation instruction for the data file is converted into a data operation request for the data interval of the data node by the client, so that the unnecessary data of the project stored in the data node are tagged, so that invalid data does not need to be processed in the subsequent garbage collection, which effectively reduces the write amplification caused by garbage collection and reduces the garbage data.

FIG. 4 illustrates a flowchart of a data processing method applied to a target data node in a storage system according to an embodiment of this specification, including steps S402 to S404.

Step S402: receiving a data operation request for a data file.

Step S404: performing tagging processing on a data interval to be operated associated with the data file in a local storage space according to the data operation request.

Optionally, the method includes:
determining operation description information according to logical address information carried in the data operation request, determining the data interval to be operated associated with the data file in a local storage space according to the operation description information, and modifying and saving attribute information of the data interval to be operated as tagging processing for the data interval to be operated.

Optionally, the method further includes:
receiving a data writing instruction for target data, determining a data interval to be used in a local storage space in response to the data writing instruction, deleting data in the data interval to be used, and writing the target data into the data interval to be used, where the data interval to be used belongs to the data interval to be operated.

Optionally, the method further includes:
receiving a data reading instruction for the data file, and sending a data reading request to the target data node according to the data reading instruction;
the target data node is further configured to receive the data reading request, generate a feedback result according to the data reading request, and send the feedback result to the client.

Optionally, the method further includes:
generating a feedback result indicating that the data is in an unreadable state in a case that the data operation request is successfully executed;
taking the original data in the data interval to be operated as a feedback result in a case that the data operation request fails to be executed;
taking the original data corresponding to the failed execution of the data operation request in the data interval to be operated as a first feedback result in a case that the data operation request fails to be executed partially, and generating a second feedback result according to the data corresponding to the successful execution of the data operation request in the data interval to be operated, and generating a feedback result based on the first feedback result and the second feedback result.

The data processing method provided in this embodiment is similar to the execution process of the target data node in the storage system provided in the above embodiment, and the same or corresponding descriptions can be referred to the above embodiment, and will not be repeated in this embodiment.

The specification provides a data processing method applied to a target data node in a storage system, which comprises the following steps: receiving a data operation request for a data file; performing tagging processing on the data interval to be operated associated with the data file in the local storage space according to the data operation request. According to the data operation request, the data node performs tagging processing on the data interval to be operated associated with the data file in the local storage space, so that invalid data does not need to be processed again in the subsequent garbage collection, which effectively reduces the write amplification generated by garbage collection and reduces garbage data, and new data can be directly written into the data interval to be operated when new data is written into the data node, thereby improving the writing efficiency, optimizing the storage data node and reducing the storage cost.

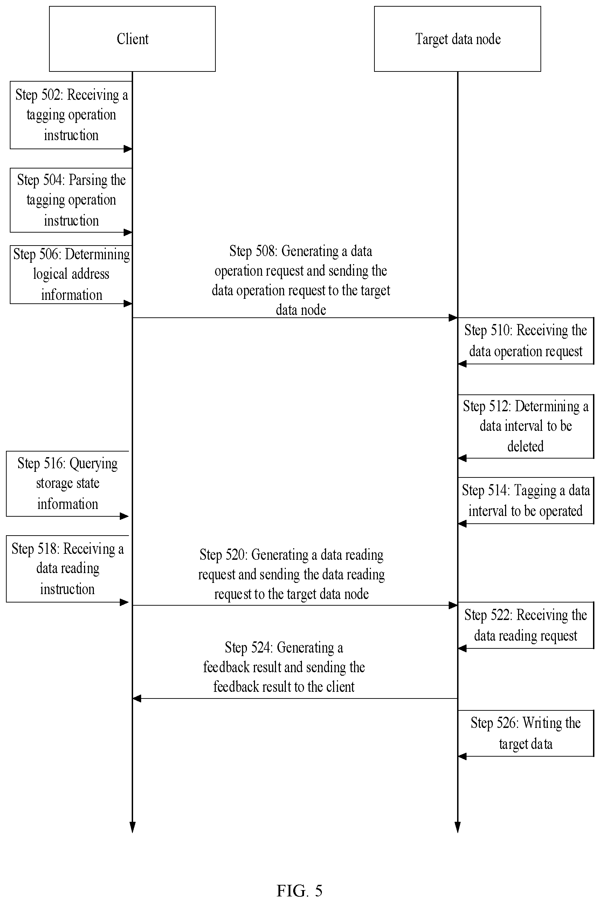

FIG. 5 shows a schematic diagram of the interaction between a client and a target data node in a storage system provided by an embodiment of this specification, and the specific steps include step S502 to step S526.

Step S502: the client receives a tagging operation instruction for a data file.

What the client receives is an instruction to perform a tagging operation on the data file which is a user's personal information file, and the tagging operation instruction is an instruction to perform trim operation for the user's personal information file.

Step S504: the client parses the tagging operation instruction to obtain tagging operation information.

After the client parses the tagging operation instruction, the tagging operation information obtained is fileId, fileOffset and Length.

Step S506: the client determines logical address information corresponding to the data file according to the tagging operation information.

After the client obtains the tagging operation instruction for the data file from the metadata management section, the logical address information of the data file can be determined according to the file-level operation information fileId, fileOffset and Length carried in the tagging operation information, and the logical address information is the Chunk-level operation information chunkId, chunkOffset and Length.

Step S508: the client generates a data operation request corresponding to the target data node according to the logical address information and sends the data operation request to the target data node.

The client generates the data operation request according to the parsed logical address information, where the data operation request is a request to operate on the data on the data block in the data node, and sends the data operation request to the target data node, so that the target data node further maps out physical address information of the data file on the hard disk according to the logical address information, and determines the data space to be operated in the storage space, thereby performing processing on the data in the data space to be operated.

Step S510: the target data node receives the data operation request for the data file.

Step S512: the target data node determines operation description information according to the logical address information carried in the data operation request, and determines the data interval to be operated associated with the data file in the local storage space according to the operation description information.

The target data node determines the operation description information according to the logical address information carried in the data operation request, and determines the data interval to be operated according to the operation description information, where the operation description information can be understood as physical address information, and the data interval to be operated is the storage space in the data block in the data node.

Step S514: the target data node modifies and saves attribute information of the data interval to be operated as a tagging processing for the data interval to be operated.

The target data node modifies the attribute information of the data interval to be operated, and saves the modification record. The attribute information of the data interval to be operated can be the header data of the data block, such as the capacity information of the data block and the tag information of the data block (whether it has been processed by trim or not).

Step S516: When the client determines that operation feedback information corresponding to the data operation request is operation failure, storage state information of the tagging operation instruction is queried and the operation processing corresponding to the storage state information is executed.

When the client determines that the trim operation failed at this time, the storage state information is queried, where the storage state information is divided into persistent storage state and non-persistent storage state, and the operation corresponding to the storage state information is executed.

Step S518: the client receives a data reading instruction for the data file.

After receiving the data reading instruction to read the data file, the client will send a corresponding data reading request to the target data node. The data reading instruction can be understood as an instruction to read the data file. As the data file has been trimmed before, the client reads trimmed data. In a practical application, the data reading instruction can also be an instruction to read any type of data file, such as reading untrimmed data.

Step S520: the client sends a data reading request to the target data node according to the data reading instruction.

Step S522: the target data node receives the data reading request.

Step S524: the target data node generates a feedback result according to the data reading request and sends the feedback result to the client.

After receiving the data reading request, the target data node generates a feedback result according to the status of performing trim on the data file. Specifically, when the user's personal information is trimmed successfully, the feedback result includes data of all zeros. When the user's personal information fails to be trimmed, the feedback result includes the user's personal information. When the user's personal information was partially trimmed successfully and partially fails to be trimmed, the feedback results include partial data of all zeros and partial user's personal information.

Step 526: the target data node receives a data writing instruction for target data, determines a data interval to be used in the local storage space in response to the data writing instruction, deletes the data in the data interval to be used, and writes the target data into the data interval to be used, where the data interval to be used belongs to the data interval to be operated.

When the target data node receives the data writing instruction of the target data, it can multiplex the data interval to be operated, and the target data can be the updated data corresponding to the data file, so when such data is written, the data interval corresponding to the original deleted data can be selected for writing. The target data can also be other data files. When new data needs to be written into the data node, it can also be written into the data interval to be operated.

To sum up, in the storage system provided by the embodiment of this specification, the tagging operation instruction for the data file is converted into the data operation request for the data interval of the data node through the client, and the data unnecessary for the project stored in the data node is tagged, so that the invalid data does not need to be processed in the subsequent garbage collection, thus effectively reducing the write amplification generated by garbage collection and reducing the garbage data. And new data can also directly write the data interval to be operated when the new data is subsequently written into the data node, so as to improve the writing efficiency, optimize the storage data node and reduce the storage cost.

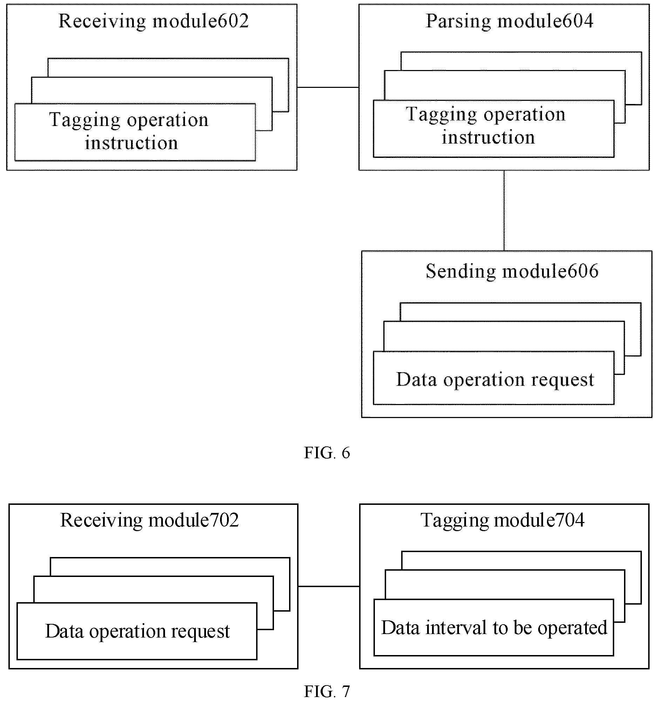

Corresponding to the above method embodiment, this specification also provides an embodiment of a data processing apparatus. FIG. 6 shows a structural schematic diagram of a data processing device applied to a client in a storage system provided by an embodiment of this specification. As shown in FIG. 6, the apparatus includes:
a receiving module 602, configured to receive a tagging operation instruction for a data file;
a parsing module 604, configured to parse the tagging operation instruction to obtain tagging operation information;
a sending module 606, configured to generate a data operation request corresponding to a target data node according to the tagging operation information, and send the data operation request to the target data node.

Optionally, the parsing module 604 is further configured to:
determine logical address information corresponding to the data file according to the tagging operation information, and generate a data operation request corresponding to the target data node based on the logical address information.

Optionally, the storage system is a distributed file system, the client includes a tagging operation interface, and the parsing module 604 is further configured to:
call the tagging operation interface to parse the tagging operation instruction to obtain the tagging operation information, where the tagging operation information includes file identification information, file offset information and file tagging length information.

Optionally, the apparatus further comprises a query module, configured to:
when it is determined that the operation feedback information corresponding to the data operation request is operation failure, query storage state information of the tagging operation instruction, and execute an operation processing corresponding to the storage state information.

Optionally, the query module is further configured to:
in a case that the storage state information is in a persistent storage state, executing the step of sending the data operation request to the target data node based on the persistent data operation request;
in a case that the storage state information is in a non-persistent storage state, generate processing result information corresponding to the tagging operation instruction and sent the processing result information to an index system corresponding to the storage system, where the index system is used for resending the tagging operation instruction to the storage system.

Optionally, the apparatus further comprises a reading module configured to:
receive a data reading instruction for the data file, and send a data reading request to the target data node according to the data reading instruction.

Optionally, the apparatus further comprises a storage module configured to:
receive a tagging operation instruction for a data file, store the tagging operation information associated with the tagging operation instruction in an operation log, and update a data operation table associated with the data file according to the tagging operation information recorded in the operation log under a condition that the operation log meets the a log information processing condition; generate a data operation request corresponding to the target data node based on the updated data operation table, and send the data operation request to the target data node.

According to the data processing apparatus provided by this specification, the tagging operation instruction for the data file is converted into the data operation request for the data interval of the data node through the client, and the data unnecessary for the project stored in the data node is tagged, so that invalid data does not need to be processed in the subsequent garbage collection, thus effectively reducing the write amplification generated by garbage collection and reducing the garbage data.

The above is a schematic scheme of the data processing apparatus of this embodiment. It should be noted that the technical scheme of the data processing apparatus belongs to the same concept as the technical scheme of the above data processing method, and content not described in detail in the technical scheme of the data processing apparatus can be referred to the description of the technical scheme of the above data processing method.

Corresponding to the above method embodiment, this specification also provides an embodiment of a data processing apparatus. FIG. 7 shows a structural schematic diagram of a data processing apparatus applied to a target data node in a storage system provided by an embodiment of this specification. As shown in FIG. 7, the apparatus includes:
a receiving module 702, configure to receive a data operation request for a data file;
a tagging module 704, configured to perform tagging processing on a data interval to be operated associated with the data file in a local storage space according to the data operation request.

Optionally, the tagging module 704 is further configured to:
determine the data interval to be operated associated with the data file in the local storage space according to operation description information carried in the data operation request, modify and save and attribute information of the data interval to be operated as tagging processing for the data interval to be operated.

Optionally, the apparatus further includes a writing module configured to:
receive a data writing instruction for target data, determining a data interval to be used in the local storage space in response to the data writing instruction, delete data in the data interval to be used, and writing target data into the data interval to be used, where the data interval to be used belongs to the data interval to be operated.

Optionally, the apparatus further includes a feedback module configured to:
receive a data reading request, generate a feedback result according to the data reading request, and sending the feedback result to the client.

Optionally, the apparatus further includes a feedback module configured to:
generate feedback result indicating that the data is unreadable when the data operation request is successfully executed;
take the original data in the data interval to be operated as a feedback result in a case that the data operation request fails to be executed;
take the original data corresponding to the failed execution of the data operation request in the data interval to be operated as a first feedback result in a case that the data operation request partially fails to execute, and generate a second feedback result according to the data corresponding to the successful execution of the data operation request in the data interval to be operated, and generate a feedback result based on the first feedback result and the second feedback result.

With the data processing apparatus provided in this specification, the data node performs tagging processing on the data interval to be operated associated with the data file in the local storage space according to the data operation request, so that invalid data does not need to be processed in the subsequent garbage collection, which effectively reduces the write amplification generated by garbage collection and reduces the garbage data, and also enables new data to be directly written into the data interval to be operated when the new data is subsequently written to the data node, thus to improve the writing efficiency, optimize the storage data node and reduce the storage cost.

The above is a schematic scheme of the data processing apparatus of this embodiment. It should be noted that the technical scheme of the data processing apparatus belongs to the same concept as the technical scheme of the above data processing method, and content not described in detail in the technical scheme of the data processing apparatus can be referred to the description of the technical scheme of the above data processing method.

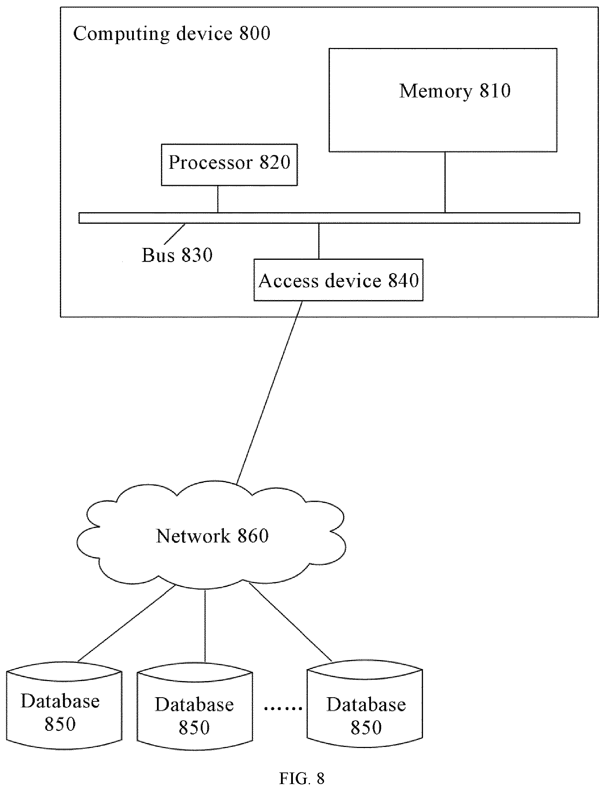

FIG. 8 shows a structural block diagram of a computing device 800 according to an embodiment of this specification. Components of the computing device 800 include, but are not limited to, a memory 810 and a processor 820. The processor 820 is connected with the memory 810 through the bus 830, and the database 850 is used to store data.

The computing device 800 also includes an access device 840 that enables the computing device 800 to communicate via one or more networks 860. Examples of these networks include the public switched telephone network (PSTN), local area network (LAN), wide area network (WAN), personal area network (PAN) or a combination of communication networks such as the Internet. The access device 840 may include one or more of any type of network interfaces (e.g., network interface card (NIC)) of wired or wireless, such as IEEE802.11 wireless local area network (WLAN) wireless interface, worldwide interoperability for microwave access (Wi-MAX) interface, Ethernet interface, universal serial bus (USB) interface, cellular network interface, Bluetooth interface, and near field communication (NFC) interface.

In one embodiment of this specification, the above components of the computing device 800 and other components not shown in FIG. 8 may also be connected to each other, for example, through a bus. It should be understood that the structural block diagram of the computing device shown in Figure 8 is only for the purpose of illustration, and is not a limitation on the scope of this specification. Those skilled in the art can add or replace other components as needed.

The computing device 800 can be any type of static or mobile computing device, including mobile computers or mobile computing devices (e.g., tablet computers, personal digital assistants, laptop computers, notebook computers, netbooks, etc.), mobile phones (e.g., smart phones), wearable computing devices (e.g., smart watches, smart glasses, etc.) or other types of mobile devices, or static computing devices such as desktop computers or PCs. Computing device 800 may also be a mobile or stationary server.

Where the processor 820 implements the steps of the data processing method when executing the computer instructions.

The above is a schematic scheme of a computing device of this embodiment. It should be noted that the technical scheme of the computing device belongs to the same concept as the technical scheme of the above data processing method. For content not described in detail in the technical scheme of the computing device, please refer to the description of the technical scheme of the above data processing method.

An embodiment of this specification also provides a computer-readable storage medium, which stores computer instructions that, when executed by a processor, realize the steps of the data processing method as described above.

The above is a schematic scheme of a computer-readable storage medium of this embodiment. It should be noted that the technical scheme of the storage medium belongs to the same concept as the technical scheme of the above data processing method, and content not described in detail in the technical scheme of the storage medium can be referred to the description of the technical scheme of the above data processing method.

An embodiment of this specification also provides a computer program, wherein when the computer program is executed in a computer, the computer is caused to execute the steps of the above data processing method.

The above is a schematic scheme of a computer program of this embodiment. It should be noted that the technical scheme of the computer program belongs to the same concept as the technical scheme of the above data processing method, and content not described in detail in the technical scheme of the computer program can be referred to the description of the technical scheme of the above data processing method.

Specific embodiments of this specification have been described above. Other embodiments are within the scope of the appended claims. In some cases, the actions or steps recited in the claims may be performed in a different order than in the embodiments and still achieve the desired results. In addition, the processes depicted in the drawings do not necessarily require the specific order or the sequential order shown to achieve the desired results. In some embodiments, multitasking and parallel processing are also possible or may be advantageous.

The computer instructions include computer program code, which can be in source code form, object code form, executable file or some intermediate form, etc. The computer-readable medium may include any entity or device capable of carrying the computer program code, recording medium, U disk, mobile hard disk, magnetic disk, optical disk, computer memory, Read-Only Memory (ROM, Read-Only Memory), Random Access Memory (RAM, Random Access Memory), electric carrier signal, telecommunication signal, software distribution medium, etc. It should be noted that the contents contained in the computer-readable medium can be appropriately increased or decreased according to the requirements of legislation and patent practice in the jurisdiction. For example, in some jurisdictions, according to legislation and patent practice, the computer-readable medium does not include electric carrier signals and telecommunication signals.

It should be noted that for the sake of simple description, all the aforementioned method embodiments are expressed as a series of action combinations, but those skilled in the art should know that the embodiments of the specification are not limited to the described action sequence, as some steps can be performed in other sequences or at the same time according to the embodiments of the specification. Secondly, those skilled in the art should also know that the embodiments described in the specification are all preferred embodiments, and the actions and modules involved are not necessarily necessary for the embodiments in this specification.

In the above-mentioned embodiments, the description of each embodiment has its own emphasis. For the parts not detailed in one embodiment, please refer to the relevant descriptions of other embodiments.

The preferred embodiments of this specification disclosed above are only used to help explain this specification. Alternative embodiments do not describe all the content in detail, nor are they limited the invention to the specific embodiments described. Obviously, many modifications and changes can be made according to the contents of the embodiments in this specification. These embodiments are selected and described in detail in this specification in order to better explain the principles and practical applications of the embodiments in this specification, so that those skilled in the technical field can better understand and make use of this specification. This specification is limited only by the claims and their full scope and equivalents.

## Claims

1. A storage system comprising a client and a data node;
the client is configured to receive a tagging operation instruction for a data file, parse the tagging operation instruction to obtain tagging operation information, generate a data operation request corresponding to a target data node according to the tagging operation information, and send the data operation request to the target data node; and
the target data node is configured to receive the data operation request, and perform a tagging processing on data interval to be operated associated with the data file in a local storage space according to the data operation request.

2. The system according to claim 1, wherein the client is configured to determine logical address information corresponding to the data file according to the tagging operation information, and generate the data operation request corresponding to the target data node based on the logical address information.

3. The system according to claim 1, wherein the target data node is configured to determine operation description information according to logical address information carried in the data operation request, determine the data interval to be operated associated with the data file in the local storage space according to the operation description information, and modify and save attribute information of the data interval to be operated as the tagging processing for the data interval to be operated.

4. The system according to claim 1, wherein the client is further configured to query storage state information of the tagging operation instruction and execute an operation processing corresponding to the storage state information upon determining that operation feedback information corresponding to the data operation request is an operation failure.

5. The system according to claim 4, wherein the client is configured to execute a step of sending the data operation request to the target data node based on a persistent data operation request in a case that the storage state information is in a persistent storage state; and
generate processing result information corresponding to the tagging operation instruction in a case that the storage state information is in a non-persistent storage state and send the processing result information to an index system corresponding to the storage system, wherein the index system is configured to resend the tagging operation instruction to the storage system.

6. The system according to claim 1, wherein the target data node is further configured to receive a data writing instruction for target data, determine a data interval to be used in the local storage space in response to the data writing instruction, delete data in the data interval to be used, and write the target data into the data interval to be used, wherein the data interval to be used belongs to the data interval to be operated.

7. The system according to claim 1, wherein the client is further configured to receive a data reading instruction for the data file and send a data reading request to the target data node according to the data reading instruction; and
the target data node is further configured to receive the data reading request, generate a feedback result according to the data reading request, and send the feedback result to the client.

8. The system according to claim 7, wherein the target data node is configured to generate a feedback result indicating that the data is in an unreadable state in a case that the data operation request is successfully executed;
take original data in the data interval to be operated as the feedback result in a case that the data operation request fails to be executed; and
take original data corresponding to failed execution of the data operation request in the data interval to be operated as a first feedback result in a case that the data operation request partially fails to be executed, and generate a second feedback result according to data corresponding to successful execution of the data operation request in the data interval to be operated, and generate a feedback result based on the first feedback result and the second feedback result.

9. The system according to claim 1, wherein the client is configured to receive a tagging operation instruction for the data file, store the tagging operation information associated with the tagging operation instruction in an operation log, and update a data operation table associated with the data file according to the tagging operation information recorded in the operation log in a case that the operation log meets a log information processing condition; and
generate a data operation request corresponding to the target data node based on the updated data operation table, and send the data operation request to the target data node.

10. The system according to any one of claims 1-9, wherein the storage system is a distributed file system, and the client comprises a tagging operation interface; wherein
the client is configured to call the tagging operation interface to parse the tagging operation instruction and obtain the tagging operation information, wherein the tagging operation information comprises file identification information, file offset information and file tagging length information.

11. A data processing method applied to a client in a storage system, comprising:
receiving a tagging operation instruction for a data file;
parsing the tagging operation instruction to obtain tagging operation information;
generating a data operation request corresponding to a target data node according to the tagging operation information, and sending the data operation request to the target data node.

12. A data processing method applied to a target data node in a storage system, comprising:
receiving a data operation request for a data file;
performing a tagging processing on a data interval to be operated associated with the data file in a local storage space according to the data operation request.

13. A computing device, comprising a memory, a processor, and computer instructions stored in the memory and executable on the processor, wherein when the processor executes the computer instructions, the steps of the method according to claim 11 or 12 are implemented.

14. A computer-readable storage medium storing computer-executable instructions, and when the computer instructions are executed by a processor, the steps of the method according to claim 11 or 12 are implemented.
